# FASCICULE DE BREVET EUROPEEN

(11) **EP 3 658 790 B1**
(45) Date de publication et mention de la délivrance du brevet: **07.09.2022**
(21) Numéro de dépôt: 18752589.4
(22) Date de dépôt: 18.07.2018
(51) Int. Cl.: F16B 37/04, E05B 15/02

(54) **UN SYSTÈME DE CAGE ÉCROU COMPORTANT UNE CAGE ÉCROU ET UN SUPPORT SUR LEQUEL LA CAGE EST DESTINÉE À ÊTRE MONTÉE**
MUTTERKÄFIGSYSTEM MIT EINEM MUTTERKÄFIG UND EINEM TRÄGER, AUF DEM DER KÄFIG MONTIERT WERDEN SOLL
NUT CAGE SYSTEM COMPRISING A NUT CAGE AND A SUPPORT ON WHICH THE CAGE IS INTENDED TO BE MOUNTED

(30) Priorité: 26.07.2017 FR 1757103
(43) Date de publication de la demande: 03.06.2020
(73) Titulaire: LISI Automotive Rapid, 95650 Puiseux-Pontoise (FR)
(72) Inventeur: MAURICE, Philippe, 68240 Kaysersberg-Vignoble (FR); NGUYEN, Benjamin, 77340 Pontault Combault (FR)
(74) Mandataire: Lefevre-Groboillot, David André
(86) Numéro de dépôt international: PCT/FR2018/051833
(87) Numéro de publication internationale: WO 2019/020908

(56) Documents cités:
- WO-A1-2012/029254
- DE-A1- 1 500 930
- JP-A- S5 634 518
- JP-U- S49 113 323
- US-A- 2 908 311

## Description

L'invention concerne un système de cage écrou comportant une cage écrou et un support sur lequel la cage est destinée à être montée.

Les systèmes de ce type qui sont connus par exemple de DE1500930, présentent l'inconvénient majeur qu'ils sont complexes et que le montage de la cage sur le support nécessite l'utilisation d'outils et est difficile à mettre en oeuvre.

L'invention a pour but de pallier cet inconvénient.

Pour atteindre ce but, la cage écrou du système cage écrou selon l'invention comprend un dispositif de moyen de positionnement et de fixation sur le support par un déplacement relatif manuel de la cage sur le support dans une position dans laquelle ces moyens coopèrent avec des moyens de butée du support.

Selon l'invention, les moyens de fixation de la cage sur le support sont adaptés pour permettre un mouvement relatif l'une sur l'autre de rattrapage de jeu.

Selon l'invention, le dispositif des moyens de fixation de la cage comprend au moins une ailette et le support comprend un élément de butée pour chaque ailette pour assurer un positionnement de la cage sur le support dans une direction prédéterminée.

Selon une caractéristique avantageuse, le système est caractérisé en ce que les moyens de butée des supports sont formés par un crochet de butée en forme d'un L dont la branche libre s'étend parallèlement à la surface de support.

Selon l'invention, la cage comporte au moins une patte flexible adaptée pour s'engager dans un évidement pratiqué dans le support, qui constitue l'élément de butée de positionnement dans la direction perpendiculaire à la direction prédéterminée précitée.

Selon encore une autre caractéristique, le système est caractérisé en ce que le support est un renfort à fixer sur une structure de support.

Selon encore une autre caractéristique, le système est caractérisé en ce que le support est le renfort de la doublure d'une porte d'un véhicule automobile.

Selon encore une autre caractéristique, le système est caractérisé en ce que la cage comporte au moins un logement d'un écrou ou d'une vis, qui est pourvu d'un moyen de renforcement pour pouvoir résister aux couples de serrage de l'écrou ou de la vis.

Selon encore une autre caractéristique, le système est caractérisé en ce qu'il comprend au moins un logement d'écrou ou de vis, qui comporte des moyens d'auto-indexage et d'auto-centrage de l'écrou ou de la vis dans le logement.

Selon encore une autre caractéristique, le système est caractérisé en ce que le logement comprend une partie d'introduction de l'écrou ou de la vis, disposée axialement au dessus de la partie de logement de l'écrou ou de vis, qui comporte des moyens assurant automatiquement la mise en place de l'écrou ou de la vis dans la position angulaire que l'écrou ou la vis doit avoir dans la partie de logement.

Selon encore une autre caractéristique, le système est caractérisé en ce que la partie d'introduction comprend des éléments de forme de surface plane se répétant dans la direction périphérique sur la surface de cette partie, qui sont configurés de façon à provoquer dans cette partie une rotation de l'écrou ou de la vis dans sa position angulaire de réception dans la partie de logement, sous l'effet d'une force axiale d'insertion de l'écrou ou de la vis dans le logement.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :
- La figure 1 est une vue en perspective d'un premier mode de réalisation d'une cage écrou d'un système cage écrou selon l'invention.
- les figures 2 à 4 sont des vues en perspective qui illustrent la mise en place de la cage écrou sur son support, en l'espèce un renfort de doublure de porte d'un véhicule ;
- la figure 5 est une vue de détail, en perspective, de la partie indiquée par la flèche V sur la figure 1
- les figures 6A et 6B sont des vues respectivement en perspective et latérale de la cage écrou d'un deuxième mode de réalisation du système cage écrou selon l'invention ;
- les figures 7 et 8 sont des vues de dessus du deuxième mode de réalisation du système cage écrou selon l'invention et de la mise en position de la cage sur le renfort ;
- les figures 9 et 10 sont des vues de dessus d'un troisième mode de réalisation du système selon l'invention et de la mise en position de la cage sur le renfort ;
- les figures 11 à 13 sont des vues respectivement de dessous, de dessus et latérale d'un quatrième mode de réalisation du système cage écrou selon l'invention.
- la figure 14 est une vue en perspective qui illustre l'introduction d'un écrou dans un logement d'écrou selon l'invention ;
- la figure 15 est une vue de dessus à plus grande échelle du logement d'écrou de la figure 14;
- les figures 16 et 17 illustrent l'effet d'auto-indexation d'un écrou dans un logement selon la figure 14 ;
- la figure 18 est une vue en perspective du logement d'écrou selon la figure 15 ;
- la figure 19 est une vue en perspective illustrant une cage écrou, selon l'invention, qui est pourvue de logements et d'écrous selon les figures 14 à 18 ;
- les figures 20 et 21 sont des vues schématiques d'illustration de la réalisation de la partie d'introduction d'écrou d'un logement d'écrou selon l'invention.

Le système cage écrou selon l'invention qui sera décrit ci-après est conçu pour permettre la fixation d'objets sur une structure de support, par exemple d'une gâche pour un ouvrant de véhicule automobile, tel qu'une porte, d'un hayon ou analogue.

Le système cage écrou pourrait être posé sur un renfort doublure porte latérale, notamment coulissante ou porte arrière ou encore sur un renfort doublure côté d'habitacle d'un véhicule. On prévoirait alors un ou deux systèmes cages écrous par porte suivant le type : coulissante ou arrière ou par doublure côté habitacle et cette cage écrou serait identique pour tous les points ou symétriques droite, gauche si nécessaire en garantissant systématiquement un rattrapage de jeux.

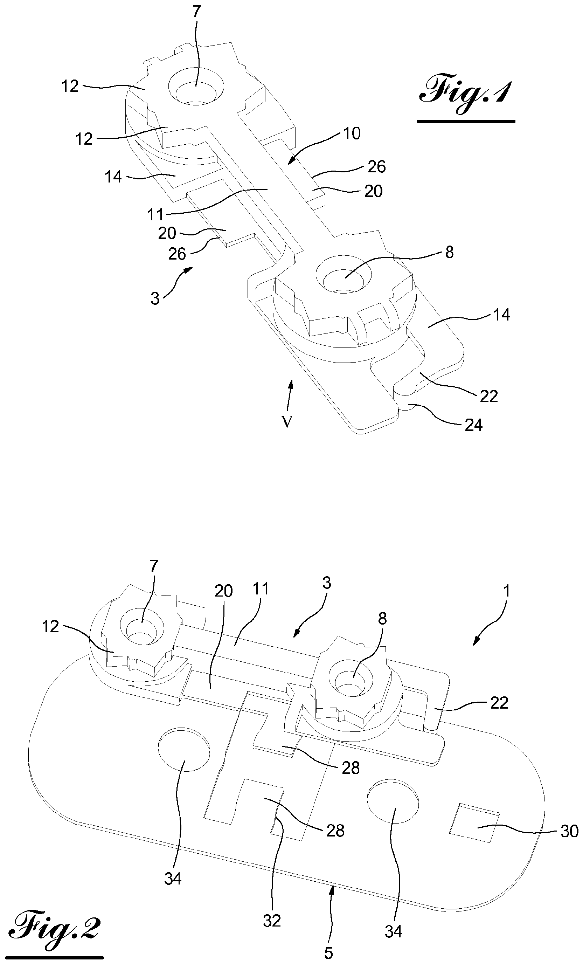

Les figures 1 à 5 illustrent, bien entendu, seulement à titre d'exemple non limitatif, un premier mode de réalisation d'un système cage écrou 1 selon l'invention, comprenant une cage écrou 3 et un renfort de doublure de porte 5 sur lequel est fixée la cage 3. La cage qui est de forme oblongue et avantageusement réalisée en matière plastique comporte deux logements 7, 8, chacun pour un écrou. Les logements sont situés au niveau des deux extrémités de la cage. Chaque logement est adapté pour loger un écrou rapporté, mais peut aussi comprendre un filet intérieur moulé ou une zone de réception pour vis à matériau tendre ou encore tout autre moyen de réception d'une vis. Pour supporter le couple de vissage, les logements sont intégrés dans une structure de caisson rigidifiée 10 par des nervures qui font saillie perpendiculairement d'une partie de semelle 14, dans l'exemple représenté par une nervure centrale 11 reliant les deux logements et des nervures radiales 12 pour chaque logement.

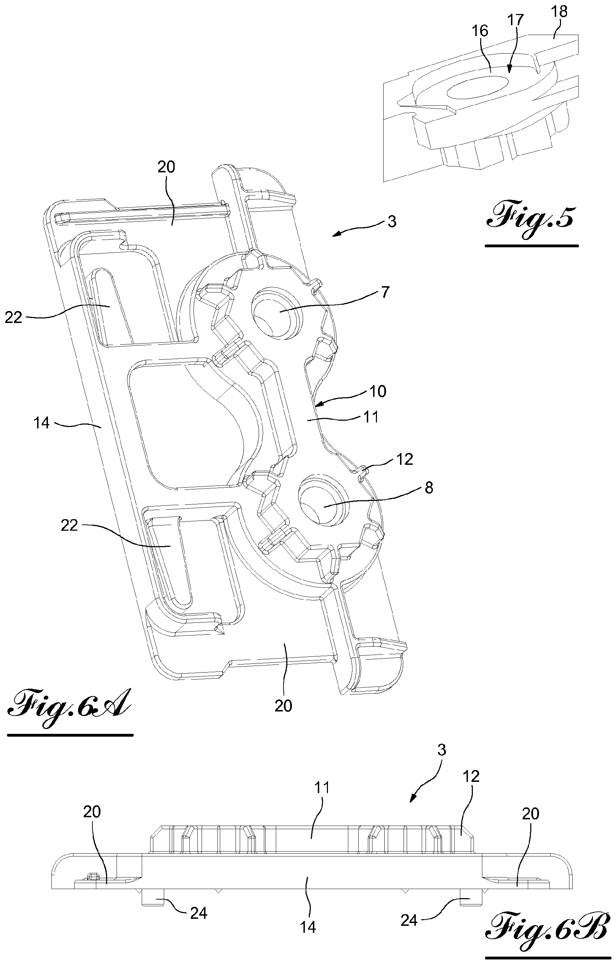

Lorsque la cage comporte des écrous, comme le montre la figure 5, la face inférieure 16 des écrous 17 est en retrait par rapport à la face inférieure) 18 de la cage plastique afin d'éviter le contact des écrous sur le support lors de l'opération de peinture de celui-ci par exemple par cataphorèse. La cage pourrait aussi être réalisée en métal.

Pour le positionnement et la fixation de la cage 3 sur le renfort 5, la cage comprend deux ailettes 20 et une patte flexible 22. La patte est située à une extrémité de la semelle 14. Elle s'étend perpendiculairement à la direction longitudinale de la cage et porte à son extrémité libre un élément de saillie 24 orienté vers le bas. Les ailettes sont prévues entre les deux logements sur la semelle dans le plan de celle-ci, adjacentes au logement opposé à l'extrémité de la cage où se trouve la patte flexible 22. Les bords 26 des ailettes sont parallèles à la direction longitudinale de la cage.

Les ailettes 20 et la patte 22 sont destinées à coopérer respectivement avec des crochets de butée 28 et un poinçonnage carré 30 pratiqué dans le renfort 5 qui est en forme d'une plaque oblongue aux extrémités arrondies. Les crochets 28 sont situées au milieu du renfort et s'étendent vers l'axe de celui-ci symétriquement par rapport à cet axe. Ils sont découpés dans la plaque et ensuite repliés de façon à s'étendre parallèlement à la plaque au-dessus du plan de celle-ci, à une distance adaptée à la hauteur des ailettes 20 de la cage, pour que ces ailettes s'engagent chacune sous un crochet 28, le fond 32 du crochet constituant une butée pour l'ailette.

En ce qui concerne le poinçonnage carré 30, il est situé au niveau d'une extrémité du renfort pour que la patte flexible 22 puisse s'engager dans le poinçonnage par son élément de saillie 24. Dans la position engagée, la patte ne dépasse pas la surface arrière du renfort, afin de ne pas être en interférence avec un élément de structure sous la plaque 5.

La plaque du renfort 5 comporte encore des trous 34 destinés à permettre le passage des vis engagées dans les écrous de la cage.

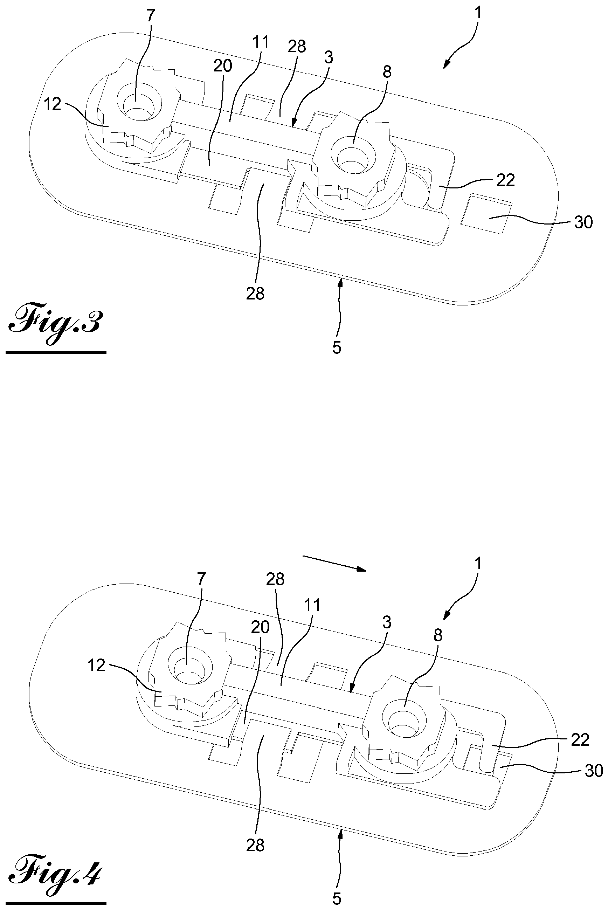

Les figures 2 à 4 illustrent la mise en position de la cage écrou 3 sur le renfort 5. La figure 2 montre la cage et le renfort dans leur position d'approche, la figure 3 la mise en position de la cage contre le renfort et la figure 4 la translation de la cage en direction de la flèche pour obtenir l'engagement des ailettes sous les crochets et le clipsage de la patte flexible 22 dans le poinçonnage 30.

Etant donné les dimensions des ailettes et des crochets, on comprend que le positionnement de la cage sur le renfort assure un rattrapage de jeu dans les deux directions, à savoir longitudinale et perpendiculaire.

Les crochets permettent encore le maintien de la cage sur son support dans la direction perpendiculaire au plan du renfort.

En donnant aux ailettes et aux crochets des hauteurs différentes, on empêche un montage de la cage sur le renfort en sens inverse à celui désiré. Cette mesure constitue donc une méthode de détrompage.

Une caractéristique importante de l'invention est le fait que la cage ne fait pas saillie au-delà de la face arrière du renfort.

Les figures 6A, 6B à 8 illustrent un deuxième mode de réalisation du système selon l'invention, qui comprend les mêmes moyens fonctionnels, d'ailleurs désignés par les mêmes références que sur les figures du premier mode de réalisation.

Le deuxième mode de réalisation se distingue du premier, notamment par la disposition des moyens de fixation de la cage sur le support, dans l'exemple représenté toujours un renfort en forme d'une plaque.

Dans le cas du deuxième mode de réalisation, la semelle de la cage présente la forme générale d'un rectangle. La cage comprend deux pattes flexibles 22 qui sont situées sur un côté du châssis renforcé 10, comportant les logements 7, 8 de deux écrous standards métalliques rapportés. Les pattes sont orientées parallèlement à la direction longitudinale du châssis sur une même ligne parallèle à cette direction, avec les éléments en saillie 24 situés près du petit bord latéral de la cage. Les zones qui accomplissent la fonction des ailettes 20 et portent donc les mêmes références, sont disposées chacune sur un petit bord latéral de la cage à hauteur des logements.

Le support formé par le renfort 5 est de forme complémentaire à celle de la cage 3 et comprend deux crochets de positionnement 28 disposés sur le renfort de façon appropriée dans chaque zone d'ailette 20 et un poinçonnage carré 30 par chaque patte flexible 22.

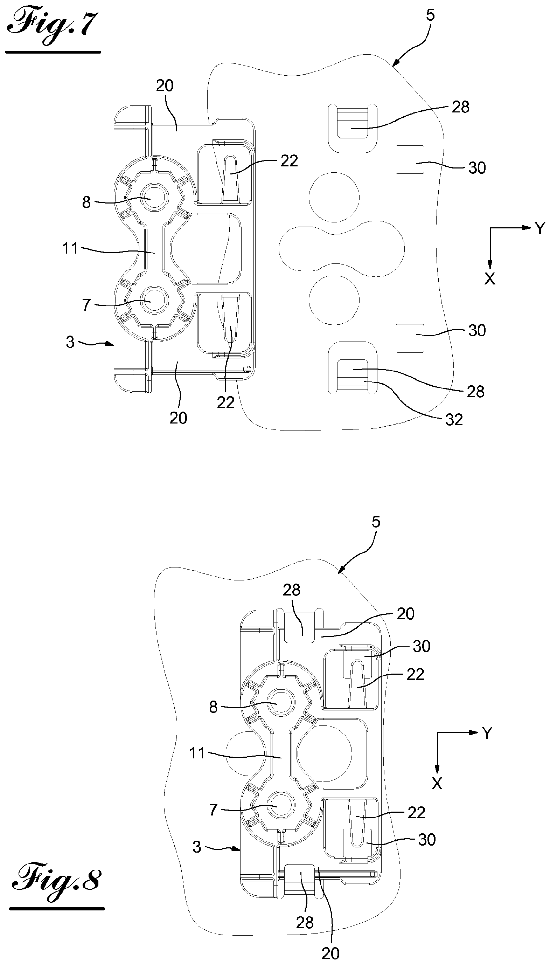

Les figures 7 et 8 illustrent la mise en positionnement de la cage écrou 3 sur le renfort 5 qui se fait en deux mouvements comme le montrent les flèches, tout d'abord en direction de l'axe X, puis en direction de l'axe Y.

Comme dans le cas du premier mode de réalisation, la cage possède un certain jeu sur le renfort qui est limitée en X par le fond de butée des crochets et en Y par les parois des poinçonnages carrés.

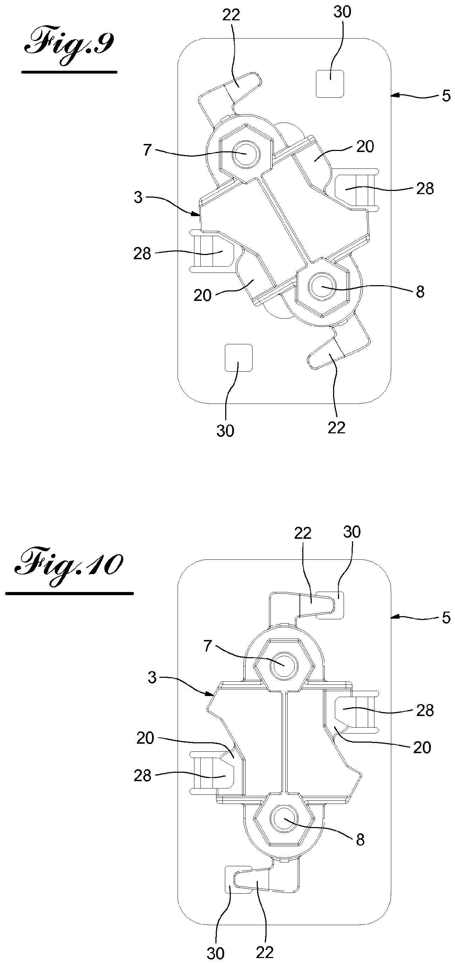

Les figures 9 et 10 montrent un troisième mode de réalisation du système cage écrou selon l'invention, qui est conçu pour une mise en position de la cage sur le support par mouvement relatif de rotation.

Dans ce cas, les pattes flexibles 22 sont situées aux extrémités de la cage et présentent chacune la forme d'un L, les branches portant des éléments en saillie 24 étant orientées perpendiculairement à l'axe longitudinal de la cage passant à travers les logements d'écrous, mais dans les sens opposés.

Les ailettes 20 sont disposées de façon similaire au premier mode de réalisation mais décalées dans la direction de l'axe de la cage pour pouvoir venir en prise, suite au mouvement de rotation de positionnement sous les crochets 28 également décalés dans la direction longitudinale du renfort. Les poinçonnages 30 sont décalés latéralement en raison de l'orientation inverse des pattes flexibles de la cage.

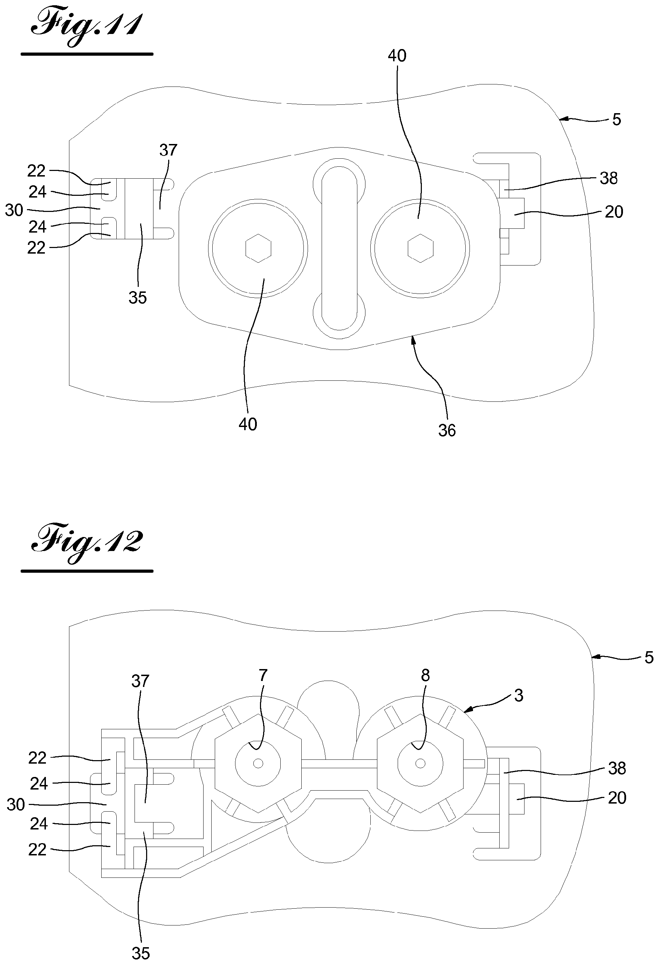

Les figures 11 à 13 montrent un quatrième mode de réalisation du système cage écrou selon l'invention, avec une gâche notée 36 fixée sur l'ensemble formé par la cage écrou 3 et le renfort 5, sur la face de ce dernier qui est opposée à celle portant la cage. Dans ce mode de réalisation, la cage présente une forme correspondant à celle du premier mode de réalisation des figures 1 à 5, mais comprend à une extrémité deux pattes flexibles 22 orientées perpendiculairement à l'axe longitudinal de la cage et symétriquement par rapport à celui-ci, avec leurs éléments en saillie 24 près l'un de l'autre et engagés dans un même trou tel qu'un poinçonnage carré 30 du renfort. La cage comprend en outre entre les pattes 22 et le logement adjacent 7 une bride 35 qui s'étend parallèlement aux pattes et est destinée à s'engager sous un crochet 37 du renfort. Ce crochet s'étend dans la direction axiale de la cage, avec son extrémité libre orientée vers la bride et les pattes.

Au niveau de l'autre extrémité, la cage 3 comporte une ailette 20 en forme d'une patte qui est engagée dans un élément de pontet 38 découpé dans le renfort et replié de façon à s'étendre perpendiculairement à la surface du renfort. On constate que la face extérieure du logement d'écrou correspondant en appui contre le pontet. Les figures montrent encore en 40 des vis de fixation de la gâche sur l'ensemble gâche-renfort qui constitue le système cage écrou selon l'invention.

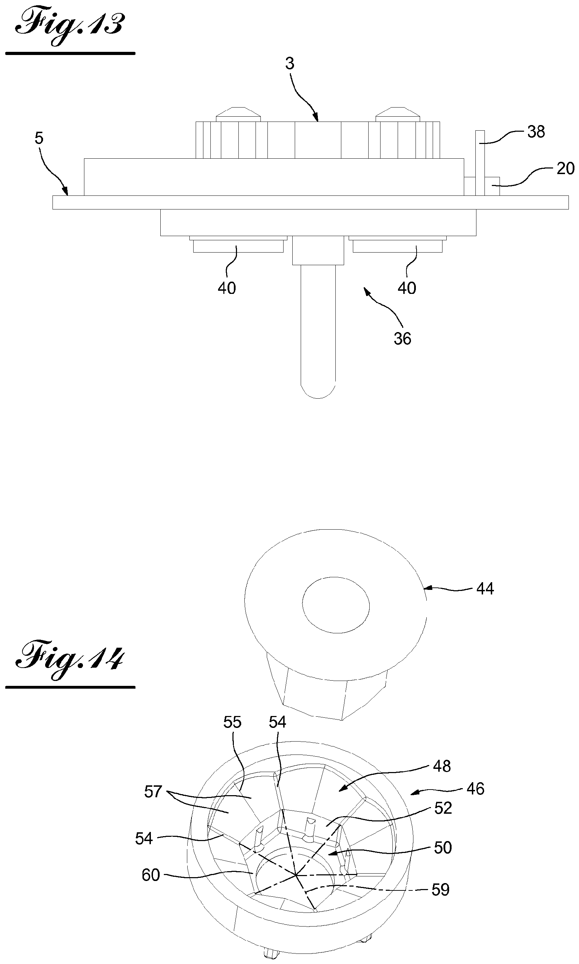

Les figures 14 à 21 illustrent un autre aspect avantageux de l'invention, à savoir une configuration du logement 46 d'un écrou de la cage écrou décrit ci-avant ou, de façon générale, d'un écrou hexagonal ou d'une vis de forme hexagonale, qui assure un effet d'auto-indexage et d'auto-centrage de l'écrou ou de la vis.

La figure 14 montre à titre d'exemple un écrou hexagonal 44 destiné à être mis en place dans le logement 46 selon l'invention.

Le logement comprend une partie supérieure 48 d'introduction de l'écrou et une partie de fond 50 de logement de l'écrou, qui présente la forme hexagonale complémentaire à celle de l'écrou, avec des parois latérales 52 ou pans 52 parallèles à l'axe de logement.

La partie supérieure d'introduction 48 présente la configuration particulière qui produit les effets d'auto-indexage et d'auto-centrage. A cette fin, cette partie est composée d'une suite de creux 54 et de sommet 55 dans sa direction périphérique. On constate que cette partie 48 est formée par une succession d'élément de pan 57, c'est-à-dire de facettes planes, dont chacun est situé entre une ligne de creux 54 et une ligne de sommet 55. Les éléments de pan 57 sont inclinés par rapport à l'axe de logement avantageusement de façon que les lignes de creux 54 convergent vers l'axe du logement, comme le montre sur la figure 14 les lignes interrompues 59.

La configuration des pans 57 est telle que la partie d'introduction supérieure 48 comprend au-dessus de chaque pan 52 de l'hexagone de la partie de fond 50 deux éléments de pan 57, avec une ligne de sommet 55 incliné au niveau du milieu du pan 52 de la partie de fond 50.

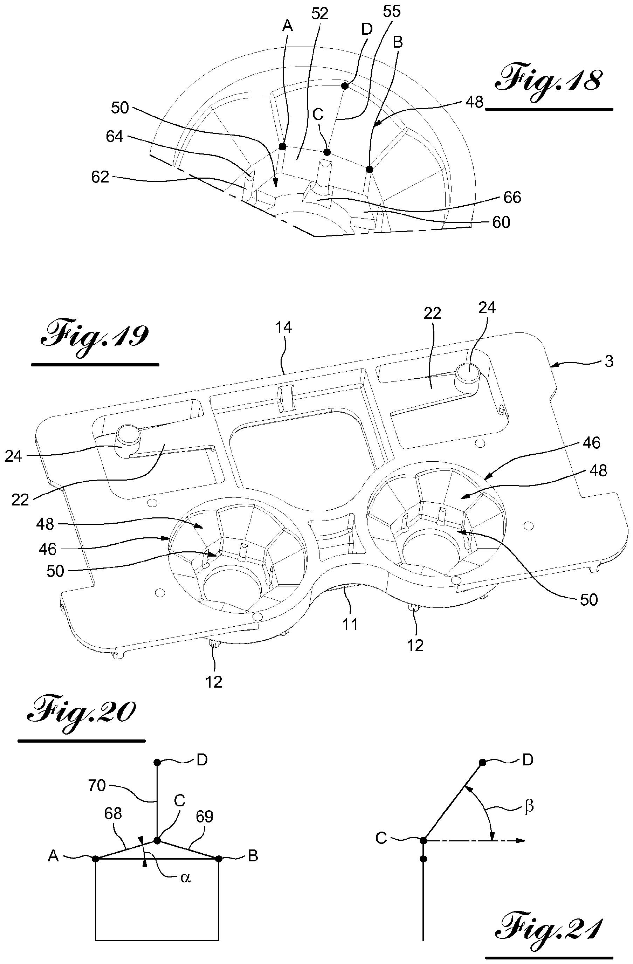

Le fait est clairement illustré par la figure 18 qui montre également en 60 des surfaces d'appui de l'écrou une fois emmanché dans la partie de fond 50 et en 62 des godrons prévus sur les faces des pans de l'hexagone du fond 50 et qui ont pour fonction d'assurer le serrage et la tenue de l'écrou emmanché et qui comportent chacun un biseau 64 facilitant l'emmanchement de l'écrou. La figure 18 montre également un dégagement 66 dans la face de fond qui est prévu pour accueillir un copeau de plastique créé par le frottement de l'écrou sur les godrons 62 afin que ce copeau n'influence pas l'appui de l'écrou sur la surface d'appui de fond.

La figure 19 illustre une cage écrou selon la figure 8, dont les logements d'écrou présentent la configuration représentée aux figures 14 à 18. Bien entendu ces configurations de logement d'écrou pourraient aussi être prévues sur les autres modes de réalisation d'une cage écrou selon l'invention représenté sur les figures, à titre d'exemple, ou sur toute autre mode de réalisation d'une cage écrou.

Les figures schématiques 20 et 21 permettent de décrire une manière de réaliser la configuration de la partie d'introduction 48 d'un écrou, à savoir les deux pans adjacents 57 de la partie 48 situés au-dessus d'un pan 52 de l'hexagone de la partie de fond 50.

Sur la figure 20, sur laquelle les points A et B, définissent le bord supérieur d'un pan de l'hexagone de fond, on tire une droite notée 68 à partir du point A selon un angle alpha de 11 ° à 17° et de la même manière une droite 69 à partir du point B.

Les deux droites se croisent au point C également identifié sur la figure 19. Puis pour réaliser l'inclinaison des pans de la partie d'introduction, on tire une droite 70 à partir du point C d'un angle β de 30° à 36° et on obtient le point D indiqué sur la figure 19.

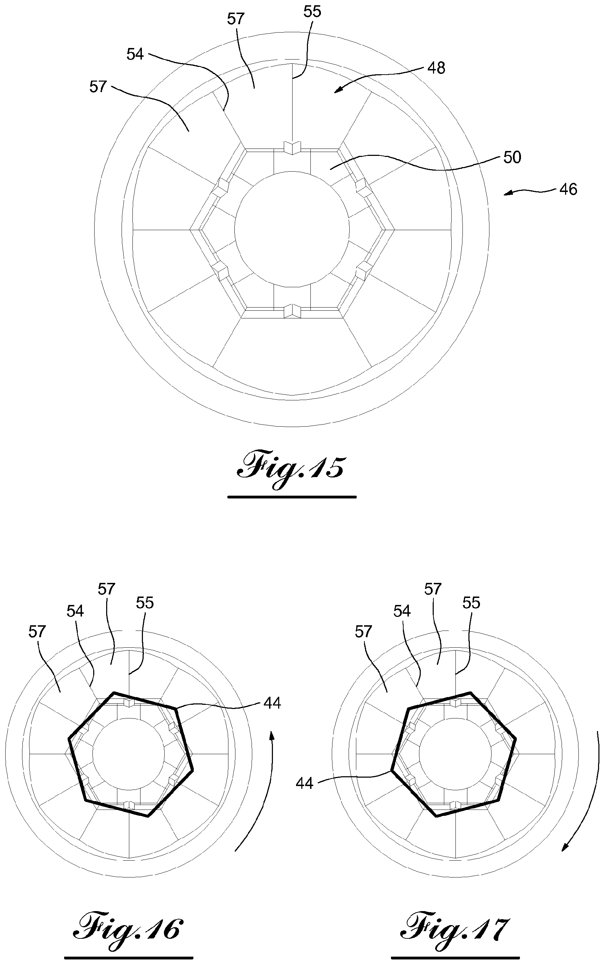

Les figures 16 et 17 illustrent l'effet d'auto-indexage qui se produit sur un écrou que l'on introduit dans la partie d'introduction 48 du logement.

Sur les figures 16 et 17, les lignes grasses représentent l'hexagone de l'écrou. Lorsque l'hexagone de l'écrou ne tombe pas parallèlement à l'hexagone du logement, par l'effet de la pression appliquée à l'écrou, celui-ci subit une rotation engendrée par la forme de la partie d'introduction 48 jusqu'à ce qu'il soit bien aligné avec l'hexagone de la partie de fond 50.

Plus précisément sur la figure 16, l'hexagone de l'écrou en trait épais est disposé angulairement par rapport aux lignes de sommet 55 de façon qu'il doit se déplacer dans le sens de la flèche, c'est-à-dire dans le sens contraire à l'aiguille d'une montre, sous l'effet d'une force d'introduction axiale. Dans le cas de la figure 17, l'hexagone, à savoir l'écrou, tourne dans le sens inverse, c'est-à-dire dans le sens de l'aiguille d'une montre.

Bien entendu, des multiples modifications peuvent être apportées aux modes de réalisation qui viennent d'être décrites à titre d'exemple non limitatifs, à condition de respecter le principe de la conception du système cage écrou qui a été exposé et qui présente des avantages majeurs. L'invention permet un montage manuel, sans outil, de la cage écrou sur son support. Il n'y a pas de soudage, sertissage en phase ultérieure. La cage écrou ne dépasse pas de l'épaisseur du support sur lequel elle est fixée. Il n'y a pas de collage des écrous sur le support lors des opérations ultérieures de peinture, par exemple par cataphorèse. La cage peut être démontée sans endommagement du support, ni de la cage. La cage peut être réutilisée. Les zones de la cage écrou qui reçoivent les écrous permettent une indexation automatique de l'hexagone extérieur de l'écrou dans l'hexagone intérieur du logement de l'écrou, ce qui facilite considérablement l'assemblage des écrous dans le logement moulé. Il est à noter que la cage peut être réalisée de tout matériau approprié, plastique ou métal. La forme des trous et pattes pourrait être différente à condition de pouvoir exécuter la fonction indiquée.

## Revendications

1. Système cage écrou comportant une cage écrou et un support sur lequel la cage est destinée à être montée, la cage écrou (3) comprenant un dispositif de moyens (20, 22, 24) de positionnement et de fixation sur le support (5) par un déplacement relatif manuel de la cage (3) sur le support (5) dans une position dans laquelle ces moyens (20, 22, 24) coopèrent avec des moyens de butée (28, 30) du support, le dispositif des moyens (20, 22, 24) de fixation de la cage comprenant au moins une ailette (20) et le support comprend un élément de butée (28) pour chaque ailette pour assurer un positionnement de la cage sur le support dans une direction prédéterminée, **caractérisé en ce que** la cage (3) comporte au moins une patte flexible (22) adaptée pour s'engager dans un évidement (30) pratiqué dans le support (5), qui constitue l'élément de butée de positionnement dans la direction perpendiculaire à la direction prédéterminée précitée, les moyens de fixation de la cage (3) sur le support (5) étant adaptés pour permettre un mouvement relatif l'une sur l'autre de rattrapage de jeu.

2. Système selon la revendication 1, **caractérisé en ce que** les moyens de butée des supports sont formés par un crochet de butée (28) en forme d'un L dont la branche libre s'étend parallèlement à la surface de support.

3. Système selon l'une des revendications précédentes, **caractérisé en ce que** le support (3) est un renfort à fixer sur une structure de support.

4. Système selon la revendication 3, **caractérisé en ce que** le support est destiné à servir comme renfort de la doublure d'une porte d'un véhicule automobile.

5. Système selon l'une des revendications précédentes, **caractérisé en ce que** la cage comporte au moins un logement (7, 8) d'un écrou ou d'une vis, qui est pourvu d'un moyen (10, 11, 12) de renforcement pour pouvoir résister aux couples de serrage de l'écrou ou de la vis.

6. Système selon l'une des revendications précédentes, **caractérisé en ce qu'**il comprend au moins un logement d'écrou ou de vis, qui comporte des moyens d'auto-indexage et d'auto-centrage de l'écrou ou de la vis dans le logement.

7. Système selon la revendication 6, **caractérisé en ce que** le logement comprend une partie (48) d'introduction de l'écrou ou de la vis, disposée axialement au-dessus de la partie de logement (50) de l'écrou ou de vis, qui comporte des moyens assurant automatiquement la mise en place de l'écrou de la vis dans la position angulaire que l'écrou ou la vis doit avoir dans la partie de logement (50).

8. Système selon la revendication 7, **caractérisé en ce que** la partie d'introduction (48) comprend des éléments de forme de surface plane se répétant dans la direction périphérique sur la surface de cette partie, qui sont configurés de façon à provoquer dans cette partie une rotation de l'écrou ou de la vis dans sa position angulaire de réception dans la partie (50) de logement, sous l'effet d'une force axiale d'insertion de l'écrou ou de la vis dans le logement.

## Patentansprüche

1. Mutterkäfigsystem, aufweisend einen Mutterkäfig und einen Träger, auf dem der Käfig bestimmt ist, angebracht zu sein, wobei der Mutterkäfig (3) eine Vorrichtung von Positionierungs- und Befestigungsmitteln (20, 22, 24) auf dem Träger (5) durch eine manuelle relative Verlagerung des Käfigs (3) auf dem Träger (5) in eine Position umfasst, in der diese Mittel (20, 22, 24) mit Anschlagmitteln (28, 30) des Trägers zusammenwirken, wobei die Vorrichtung der Befestigungsmittel (20, 22, 24) des Käfigs mindestens einen Flügel (20) umfasst und der Träger ein Anschlagelement (28) für jeden Flügel umfasst, um eine Positionierung des Käfigs auf dem Träger in einer vorher festgelegten Richtung sicherzustellen, **dadurch gekennzeichnet, dass** der Käfig (3) mindestens eine flexible Lasche (22) aufweist, die geeignet ist, in eine Aussparung (30) einzugreifen, die in den Träger (5) eingearbeitet ist, die das Positionierungs-Anschlagelement in der senkrechten Richtung zur vorgenannten vorher festgelegten Richtung bildet, wobei die Befestigungsmittel des Käfigs (3) auf dem Träger (5) geeignet sind, eine relative Spielausgleichsbewegung zueinander zu erlauben.

2. System nach Anspruch 1, **dadurch gekennzeichnet, dass** die Anschlagmittel der Träger von einem L-förmigen Anschlaghaken (28) gebildet sind, dessen freier Schenkel sich parallel zur Trägeroberfläche erstreckt.

3. System nach einem der vorangehenden Ansprüche, **dadurch gekennzeichnet, dass** der Träger (3) eine auf einer Trägerstruktur zu befestigende Verstärkung ist.

4. System nach Anspruch 3, **dadurch gekennzeichnet, dass** der Träger bestimmt ist, als Verstärkung des Futters einer Tür eines Kraftfahrzeugs zu dienen.

5. System nach einem der vorangehenden Ansprüche, **dadurch gekennzeichnet, dass** der Käfig mindestens eine Aufnahme (7, 8) einer Mutter oder einer Schraube aufweist, die mit einem Verstärkungsmittel (10, 11, 12) versehen ist, um den Spannmomenten der Mutter oder der Schraube widerstehen zu können.

6. System nach einem der vorangehenden Ansprüche, **dadurch gekennzeichnet, dass** es mindestens eine Mutter- oder Schraubenaufnahme umfasst, die Selbstindexierungs- und Selbstzentrierungsmittel der Mutter oder der Schraube in der Aufnahme aufweist.

7. System nach Anspruch 6, **dadurch gekennzeichnet, dass** die Aufnahme einen Einsetzteil (48) der Mutter oder der Schraube umfasst, der axial über dem Aufnahmeteil (50) der Mutter oder der Schraube angeordnet ist, der Mittel aufweist, die automatisch die Platzierung der Mutter der Schraube in der Winkelposition sicherstellen, die die Mutter oder die Schraube im Aufnahmeteil (50) haben muss.

8. System nach Anspruch 7, **dadurch gekennzeichnet, dass** der Einsetzteil (48) ebene Oberflächenformelemente umfasst, die sich in der Umfangsrichtung auf der Oberfläche dieses Teils wiederholen, die derart ausgelegt sind, dass in diesem Teil eine Rotation der Mutter oder der Schraube in ihre winklige Empfangsposition im Aufnahmeteil (50) unter der Wirkung einer axialen Einführkraft der Mutter oder der Schraube in die Aufnahme hervorgerufen wird.

## Claims

1. A nut cage system comprising a nut cage and a support on which the cage is intended to be mounted, the nut cage (3) comprising a device with means (20, 22, 24) for positioning and attachment on the support (5) by means of a relative manual movement of the cage (3) on the support (5) into a position in which these means (20, 22, 24) cooperate with abutment means (28, 30) of the support, the device of the means (20, 22, 24) for attachment of the cage comprising at least one fin (20) and the support comprises an abutment element (28) for each fin to ensure positioning of the cage on the support in a predetermined direction, **characterized in that** the cage (3) comprises at least one flexible tab (22) suitable for engaging in a recess (30) formed in the support (5), which constitutes the positioning abutment element in the direction perpendicular to the aforementioned predetermined direction, the means for attachment of the cage (3) on the support (5) being suitable for allowing a relative play-compensating movement of one on the other.

2. The system according to claim 1, **characterized in that** the abutment means of the supports are formed by an L-shaped abutment hook (28), the free branch of which extends parallel to the support surface.

3. The system according to one of the preceding claims, **characterized in that** the support (3) is a reinforcement to be attached on a support structure.

4. The system according to claim 3, **characterized in that** the support is intended to serve as reinforcement for the lining of a motor vehicle door.

5. The system according to one of the preceding claims, **characterized in that** the cage comprises at least one housing (7, 8) for a nut or a screw, which is provided with a reinforcing means (10, 11, 12) to be able to withstand the tightening torques of the nut or the screw.

6. The system according to one of the preceding claims, **characterized in that** it comprises at least one nut or screw housing, which comprises self-indexing and self-centering means for the nut or the screw in the housing.

7. The system according to claim 6, **characterized in that** the housing comprises an introduction part (48) for the nut or the screw, arranged axially above the housing part (50) of the nut or screw, which comprises means automatically ensuring the placement of the nut or the screw in the angular position that the nut or the screw must have in the housing part (50).

8. The system according to claim 7, **characterized in that** the introduction part (48) comprises flat surface shape elements repeating in the peripheral direction on the surface of this part, which are configured so as to cause, in this part, a rotation of the nut or the screw in its angular receiving position in the housing part (50), under the effect of an axial insertion force of the nut of the screw in the housing.
